# EUROPEAN PATENT APPLICATION

(11) **EP 4 492 777 A1**
(43) Date of publication of application: **15.01.2025**
(21) Application number: 24182188.3
(22) Date of filing: 14.06.2024
(51) Int. Cl.: H04N 13/239, G06T 7/00, H04N 23/81

(54) **ADJUSTING VISUAL OUTPUT OF STEREO CAMERA BASED ON LENS OBSTRUCTION**

(30) Priority: 14.07.2023 US 202318352498
(71) Applicant: Deere & Company, Moline, IL 61265 (US)
(72) Inventor: Cherney, Mark J., Mannheim (DE)
(74) Representative: Holst, Sönke

(57) **Abstract**

A computer accesses first imagery from a first lens and second imagery from a second lens. The first lens and the second lens are components of a stereo camera. The computer detects a disparity between the first imagery and the second imagery. The computer identifies an obstruction on the first lens based on the detected disparity. The computer generates a visual output associated with the stereo camera based on the obstruction. The computer causes display of the generated visual output.

## Description

### FIELD

This disclosure relates to adjusting a visual output of a stereo camera based on an obstruction on a lens of the stereo camera. Adjusting the visual output may be performed using processing circuitry or a memory subsystem coupled with the stereo camera.

### SUMMARY

Disclosed herein are aspects of systems, methods, computer-readable media, and apparatuses for adjusting a visual output of a stereo camera based on lens obstruction.

Some implementations are described below as numbered examples (Example 1, 2, 3, etc.). These examples are provided as examples only and do not limit the other implementations disclosed herein.

Some aspects are a method comprising: accessing first imagery from a first lens and second imagery from a second lens, the first lens and the second lens being components of a stereo camera; detecting a disparity between the first imagery and the second imagery; identifying an obstruction on the first lens based on the detected disparity; generating a visual output associated with the stereo camera based on the obstruction; and causing display of the generated visual output.

In some aspects, the method includes, wherein generating the visual output comprises: presenting the second imagery in the visual output.

In some aspects, the method includes, wherein generating the visual output comprises: presenting the first imagery in the visual output to prompt a user to clean the first lens.

In some aspects, the method includes, presenting text prompting the user to clean the first lens overlaying the first imagery.

In some aspects, the method includes, wherein generating the visual output comprises: augmenting the first imagery to remove the obstruction.

In some aspects, the method includes, wherein augmenting the first imagery comprises: identifying a portion of the second imagery corresponding to the obstruction; modifying the first imagery based on the portion of the second imagery, wherein modifying the first imagery comprises: superimposing the portion of the second imagery into the first imagery; and blending an edge of the superimposed portion of the second imagery to reduce a contrast along the edge.

In some aspects, the method includes, wherein modifying the first imagery further comprises: adjusting at least one of a tone, a hue, or a saturation of the superimposed portion of the second imagery based on at least one of the tone, the hue, or the saturation of the first imagery.

In some aspects, the method includes, causing cleaning of the first lens in response to identifying the obstruction; determining, after cleaning of the first lens, that the obstruction remains present; and providing an output for servicing the stereo camera to remove the obstruction.

In some aspects, the method includes, wherein the output for servicing the stereo camera comprises text overlaying a displayed image, the text comprising a prompt for a user to service the stereo camera.

In some aspects, the method includes, wherein identifying the obstruction is based, at least in part, on a portion of the first imagery not changing upon movement of the first lens.

In some aspects, the method includes, identifying a classification of the obstruction based on at least one of a color, a transparency, or a translucency of the obstruction; and providing an output representing the identified classification.

In some aspects, the method includes, wherein detecting the disparity and identifying the obstruction leverages an image processing engine, wherein the image processing engine includes at least one artificial neural network.

In some aspects, the method includes, wherein the obstruction obstructs a portion of a scene viewed by the first lens and reduces a quality of the first imagery.

In some aspects, the method includes, wherein detecting the disparity and identifying the obstruction are performed using at least one artificial neural network.

Some aspects are a computer-readable medium storing instructions which, when executed by processing circuitry, cause the processing circuitry to perform operations comprising: accessing first imagery from a first lens and second imagery from a second lens, the first lens and the second lens being components of a stereo camera; detecting a disparity between the first imagery and the second imagery; identifying an obstruction on the first lens based on the detected disparity; generating a visual output associated with the stereo camera based on the obstruction; and causing display of the generated visual output.

In some aspects, the computer-readable medium includes, wherein generating the visual output comprises: presenting the second imagery in the visual output.

In some aspects, the computer-readable medium includes, wherein generating the visual output comprises: presenting the first imagery in the visual output to prompt a user to clean the first lens.

Some aspects are a system comprising: processing circuitry; and a memory subsystem storing instructions which, when executed by the processing circuitry, cause the processing circuitry to perform operations comprising: accessing first imagery from a first lens and second imagery from a second lens, the first lens and the second lens being components of a stereo camera; detecting a disparity between the first imagery and the second imagery; identifying an obstruction on the first lens based on the detected disparity; generating a visual output associated with the stereo camera based on the obstruction; and causing display of the generated visual output.

In some aspects, the system includes, the stereo camera comprising the first lens and the second lens.

In some aspects, the system includes, a display unit to display the generated visual output.

Some aspects are at least one machine-readable medium including instructions that, when executed by processing circuitry, cause the processing circuitry to perform operations to implement any of the above.

Some aspects are an apparatus comprising means to implement any of the above.

Some aspects are a system to implement any of the above.

Some aspects are a method to implement any of the above.

### BRIEF DESCRIPTION OF THE DRAWINGS

This disclosure is best understood from the following detailed description when read in conjunction with the accompanying drawings. It is emphasized that, according to common practice, the various features of the drawings are not to-scale. On the contrary, the dimensions of the various features are arbitrarily expanded or reduced for clarity.
FIG. 1 is a block diagram of an example internal configuration of a computing device.
FIG. 2 is a block diagram of an example of a machine for adjusting visual output of a stereo camera.
FIG. 3 is a block diagram of an example of an image processing engine.
FIG. 4 illustrates an example of image processing involved in adjusting visual output of a stereo camera.
FIG. 5 is a flowchart of an example of a technique for adjusting visual output of a stereo camera.

### DETAILED DESCRIPTION

Machines with stereo cameras, which include two or more lenses, are used in many contexts, for example, autonomous vehicles, robotics, manufacturing, or agricultural uses. For instance, a stereo camera may be used by an autonomous vehicle or a robot to safely navigate within an environment and to avoid obstacles. In the manufacturing context, a stereo camera may be used to inspect products for quality control purposes. In the agricultural context, a stereo camera may be used to monitor crops or livestock or to measure the yield of crops. In some cases, one of the lenses of the stereo camera may be obstructed, for example, the obstructed lens may be partially covered with mud, snow, or water. Alternatively, the lens may be obstructed due to scratching or shattering. In these cases, the visual output generated by the stereo camera might be compromised. Techniques for adjusting the visual output to correct for the obstruction may be desirable.

Typically, a visual output of a stereo camera includes imagery from one of the lenses or a combination of imagery from two or more of the lenses. However, some stereo cameras lack technology for detecting obstructions. Instead, the image processing software associated with the stereo camera might assume that the obstruction is part of the scene being imaged, and may process the obstruction accordingly. This might lead to an undesirable outcome (e.g., visual output including the obstruction or visual output including the obstruction merged with the non-obstructed imagery from the other lens).

To address problems such as these, implementations of this disclosure address techniques for adjusting the visual output of a stereo camera in response to an obstruction of at least one of the lenses. The stereo camera may be a component of a machine that includes processing circuitry, a memory subsystem, and, in some cases, other components. The processing circuitry accesses first imagery from a first lens of the stereo camera and second imagery from a second lens of the stereo camera. In some cases, there may be more than two lenses, and imagery may be accessed from all or a subset of those lenses. The imagery from each lens may include a single image or multiple images. For example, the imagery may include a stream of images. Each lens may be stationery or moving. For example, the machine including the stereo camera may be a robot, an autonomous vehicle, or a human-operated vehicle that is moving.

The processing circuitry detects a disparity between the first imagery and the second imagery. For example, a smudge may be present in the first imagery but not in the second imagery. (In other words, pixels corresponding to the smudge in the first imagery lack corresponding pixels in the second imagery. Whereas, typically, pixels corresponding to an object viewed in the first imagery would map to pixels corresponding to that object in the second imagery.) The processing circuitry identifies an obstruction on the first lens based on the detected disparity. The identification of the obstruction may specify the pixels that include the obstruction.

The obstruction may be identified using machine learning techniques or using rule-based techniques. For example, if the stereo camera is moving and certain pixels in imagery of a lens are not changed during the movement, those pixels might correspond to a smudge. Alternatively, a trained artificial neural network (ANN) may be used to identify smudges. The ANN may be trained using supervised learning applied to a training dataset of images, some of which include smudges and include identifications of pixels where the smudges are positioned. The training dataset may be generated manually by human users who manually identify the smudges.

The processing circuitry generates a visual output associated with the stereo camera based on the obstruction. For example, the visual output may correspond to the second imagery. Alternatively, the visual output may correspond to the first imagery in order to encourage a user to clean the first lens. In some cases, the visual output is generated by augmenting the first imagery, based on the second imagery, to remove the obstruction. The processing circuitry causes display of the generated visual output, for example, by transmitting the generated visual output to a display unit.

As used herein, an ANN may include a computational model inspired by the structure and functioning of biological neural networks, such as the human brain. An ANN may comprise interconnected nodes, called artificial neurons, organized in layers. Each artificial neuron takes input signals, applies a mathematical function to them, and produces an output signal that is passed on to the next layer. During training of the ANN, the ANN adjusts the weights and biases used in the mathematical functions of the individual artificial neurons in layers of the ANN to represent detected patterns and relationships in the input data. This enables ANNs to perform tasks such as classification, regression, and pattern recognition. An ANN may include a convolutional neural network (CNN), a deep neural network (DNN) or any other type of artificial neural network.

An ANN may be trained by supervised learning, which involves providing the network with labeled training examples. The process starts by initializing the weights and biases (of the mathematical functions applied by the artificial neurons of the ANN) randomly. Each training example consists of an input and its corresponding desired output. The input is fed into the ANN, and its output is compared to the desired output. The difference between the ANNs output and the desired output, known as the loss or error, is calculated using a loss function (e.g., mean square error). The ANN's weights and biases are then adjusted iteratively using optimization algorithms like gradient descent, aiming to minimize the error. This adjustment process, known as backpropagation, propagates the error from the output layer back through the network, updating the weights and biases layer by layer. The process continues until the ANN's performance on the training examples reaches a satisfactory level, which may be measured by a validation set. Once trained, the ANN may be used, in the inference phase, to make predictions on new, unseen data by feeding it through the ANN and obtaining the corresponding output.

Implementations of this disclosure relate to the technical problem of processing visual data at a stereo camera when at least one lens is at least partially obstructed. Implementations of this disclosure provide a technical solution to this technical problem using processing circuitry that receives signals from the stereo camera. The processing circuitry accesses first imagery from a first lens and second imagery from a second lens. The processing circuitry detects a disparity between the first imagery and the second imagery. The processing circuitry identifies an obstruction on the first lens based on the detected disparity. The processing circuitry generates a visual output associated with the stereo camera based on the obstruction. The processing circuitry causes display of the generated visual output at a display subsystem that receives signals from the processing circuitry.

A stereo camera may include a camera with two or more lenses. In some cases, the two or more lenses are fixed into the same housing. Alternatively, the two or more lenses may be housed along the edge of a structure (e.g., of a vehicle, a machine or a fixture) comprising multiple assembled components. The technology disclosed herein may be implemented using any subset of two or mor lenses of the stereo camera. Furthermore, as used herein, a stereo camera may include multiple stereo cameras. A stereo camera may include two or more cameras (e.g., non-stereo cameras), with each camera including at least one lens. For example, a stereo camera may include two cameras - camera A and camera B - where camera A has one lens and camera B has one lens.

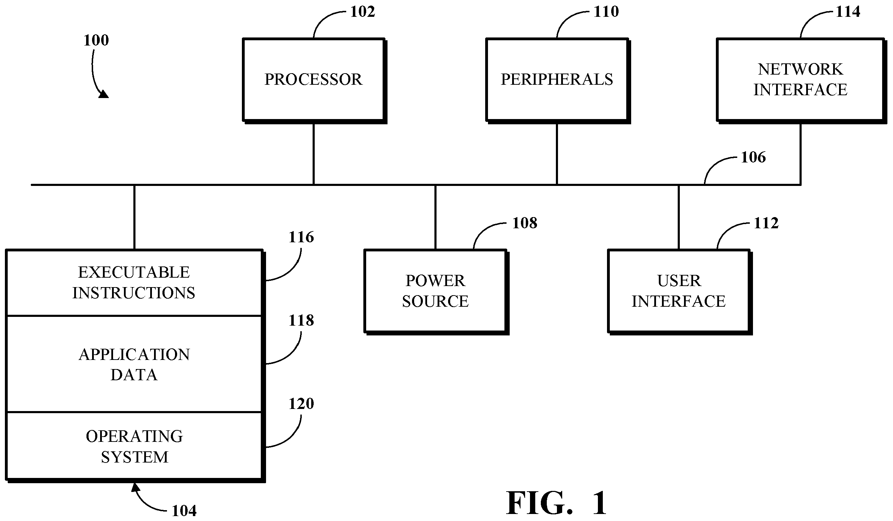

To describe some implementations in greater detail, reference is first made to examples of hardware and software structures used to adjust visual output of a stereo camera based on lens obstruction. FIG. 1 is a block diagram of an example internal configuration of a computing device 100.

The computing device 100 includes components or units, such as a processor 102, a memory 104, a bus 106, a power source 108, peripherals 110, a user interface 112, a network interface 114, other suitable components, or a combination thereof. One or more of the memory 104, the power source 108, the peripherals 110, the user interface 112, or the network interface 114 can communicate with the processor 102 via the bus 106.

The processor 102 is a central processing unit, such as a microprocessor, and can include single or multiple processors having single or multiple processing cores. Alternatively, the processor 102 can include another type of device, or multiple devices, configured for manipulating or processing information. For example, the processor 102 can include multiple processors interconnected in one or more manners, including hardwired or networked. The operations of the processor 102 can be distributed across multiple devices or units that can be coupled directly or across a local area or other suitable type of network. The processor 102 can include a cache, or cache memory, for local storage of operating data or instructions. In some cases, the processor 102 may correspond to processing circuitry that includes one or more processors arranged in one or more processing units. The one or more processing units may include, for example, at least one of a central processing unit or a graphics processing unit.

The memory 104 includes one or more memory components, which may each be volatile memory or non-volatile memory. For example, the volatile memory can be random access memory (RAM) (e.g., a DRAM module, such as DDR SDRAM). In another example, the non-volatile memory of the memory 104 can be a disk drive, a solid state drive, flash memory, or phase-change memory. In some implementations, the memory 104 can be distributed across multiple devices. For example, the memory 104 can include network-based memory or memory in multiple clients or servers performing the operations of those multiple devices. In some cases, the memory 104 corresponds to a memory subsystem that includes one or more memories. The memory subsystem may include at least one of a cache unit, a storage unit, a disk, an internal memory, an external memory, or a removable memory.

The memory 104 can include data for immediate access by the processor 102. For example, the memory 104 can include executable instructions 116, application data 118, and an operating system 120. The executable instructions 116 can include one or more application programs, which can be loaded or copied, in whole or in part, from non-volatile memory to volatile memory to be executed by the processor 102. For example, the executable instructions 116 can include instructions for performing some or all of the techniques of this disclosure. The application data 118 can include user data, database data (e.g., database catalogs or dictionaries), or the like. In some implementations, the application data 118 can include functional programs, such as a web browser, a web server, a database server, another program, or a combination thereof. The operating system 120 can be, for example, Microsoft Windows^{®}, Mac OS X^{®}, or Linux^{®}; an operating system for a mobile device, such as a smartphone or tablet device; or an operating system for a non-mobile device, such as a mainframe computer.

The power source 108 provides power to the computing device 100. For example, the power source 108 can be an interface to an external power distribution system. In another example, the power source 108 can be a battery, such as where the computing device 100 is a mobile device or is otherwise configured to operate independently of an external power distribution system. In some implementations, the computing device 100 may include or otherwise use multiple power sources. In some such implementations, the power source 108 can be a backup battery.

The peripherals 110 includes one or more sensors, detectors, or other devices configured for monitoring the computing device 100 or the environment around the computing device 100. For example, the peripherals 110 may include a stereo camera that includes two or more lenses. In another example, the peripherals 110 may include a geolocation component, such as a global positioning system location unit. In another example, the peripherals may include a temperature sensor for measuring temperatures of components of the computing device 100, such as the processor 102. In some implementations, the computing device 100 can omit the peripherals 110. For example, the computing device 100 may be coupled with a remote stereo camera and may communicate with the stereo camera via a network using the network interface 114.

The user interface 112 includes one or more input interfaces and/or output interfaces. An input interface may, for example, be a positional input device, such as a mouse, touchpad, touchscreen, or the like; a keyboard; or another suitable human or machine interface device. An output interface may, for example, be a display, such as a liquid crystal display, a cathode-ray tube, a light emitting diode display, or other suitable display.

The network interface 114 provides a connection or link to a network (e.g., at least one of a cellular network, a wired network, a wireless network, a local area network, or a wide area network). The network interface 114 can be a wired network interface or a wireless network interface. The computing device 100 can communicate with other devices via the network interface 114 using one or more network protocols, such as using Ethernet, transmission control protocol (TCP), internet protocol (IP), power line communication, an IEEE 802.X protocol (e.g., Wi-Fi, Bluetooth, or ZigBee), infrared, visible light, general packet radio service (GPRS), global system for mobile communications (GSM), code-division multiple access (CDMA), Z-Wave, another protocol, or a combination thereof.

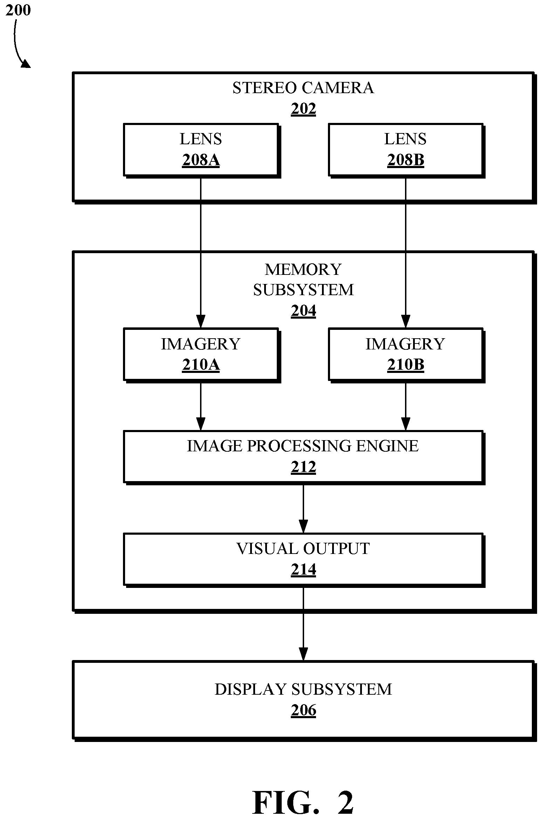

FIG. 2 is a block diagram of an example of a machine 200 for adjusting visual output of a stereo camera. The machine 200 may correspond to the computing device 100 and may include all or a portion of the components of the computing device 100 described in conjunction with FIG. 1. As shown, the machine 200 is a single machine. In alternative implementations, the components of the machine 200 may be distributed across multiple machines connected with one another over a network connection or a direct wired or wireless connection.

As illustrated in FIG. 2, the machine 200 includes a stereo camera 202, a memory subsystem 204, and a display subsystem 206. The stereo camera 202 includes two lenses 208A, 208B. In alternative implementations, the stereo camera 202 may include more than two lenses. The stereo camera 202 may be a component of the machine 200 or may be coupled to the machine 200 by a wired or wireless connection. The memory subsystem 204 includes one or more memories (where each memory may correspond to the memory 104). The display subsystem 206 includes one or more display units (e.g., screens or monitors) that are internal to the machine 200 and/or coupled to the machine 200 (e.g., by a wired or wireless connection). The stereo camera 202 and/or the display subsystem 206 may correspond to the peripherals 110.

As shown, the lens 208A generates imagery 210A, which is provided to the memory subsystem 204. The lens 208B generates imagery 210B, which is provided to the memory subsystem. The imagery 210A (and, similarly, the imagery 210B) may include a single image, multiple images, or a stream of images. In some cases, the lens 208A has an obstruction (e.g., a smudge or a crack) obscuring a portion of the lens 208A. This obstruction appears in the imagery 210A (but not the imagery 210B).

As shown, the imagery 210A and the imagery 210B are provided to an image processing engine 212. The image processing engine 212 uses artificial intelligence techniques and/or rule-based techniques to detect the obstruction in the imagery 210Ato generate a visual output 214 based on the imagery 210A and the imagery 210B. for example, the image processing engine 212 may include at least one ANN. The visual output 214 may take the obstruction into account. The visual output 214 is provided to the display subsystem 206 for display at the display subsystem 206.

In some cases, the visual output 214 corresponds to the imagery 210A, which includes the obstruction, in order to encourage a user of the machine 200 to clean the obstruction off the lens 208A and/or to service the stereo camera 202. In these cases, the visual output 214 may include text (e.g., overlaying the imagery in the output or adjacent to that imagery) prompting the user to clean the lens 208A. In some cases, the visual output 214 corresponds to the imagery 210B, which lacks the obstruction, in order to allow the user to clearly see the scene being imaged by the stereo camera 202. In some cases, the visual output 214 may be based on a combination of the imagery 210A and the imagery 210B. Some examples of techniques for generating the visual output based on the imagery 210A and/or the imagery 210B are described below.

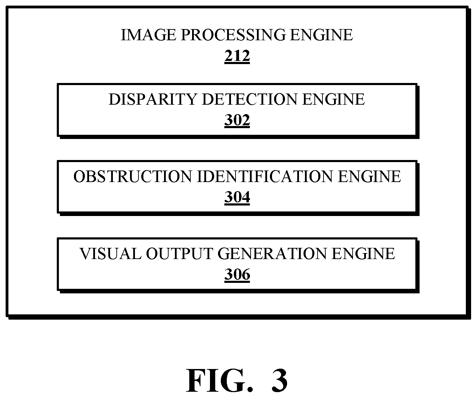

FIG. 3 is a block diagram of an example of the image processing engine 212 of FIG. 2. As shown, the image processing engine 212 includes a disparity detection engine 302, an obstruction identification engine 304, and a visual output generation engine 306.

As illustrated in FIG. 2, the image processing engine 212 receive the imagery 210A from the lens 208A and the imagery 210B from the lens 208B. If there are more than two lenses, the image processing engine 212 may also receive the imagery from the other lenses. The disparity detection engine 302 detects a disparity between the imagery 210A and the imagery 210B. The disparity detection engine 302 takes into account the disparity due to different positions of the lenses 208A, 208B, and identifies disparities that are due to obstruction (e.g., by smudges or cracks in the material (e.g., glass or plastic) of the lens) rather than differences in position. For example, the imagery 210A might include a position shift of the imagery 210B due to the different positions of the lenses 208A, 208B, which is not indicative of an obstruction. However, if the imagery 210A includes a translucent smudge that is not present in the imagery 210B, it may be indicative of a smudge from a drop of water on the lens 208A.

In some cases, both of the lenses 208A, 208B (or all of the lenses if there are more than two lenses on the stereo camera 202) might have obstructions on them. The obstructions are likely to be in different positions, as it is atypical for naturally occurring obstructions (e.g., due to water, mud, or snow hitting the lenses 208A, 208B) to occur at the same position on both lenses. As a result, the disparity detection engine may detect the disparity between the imagery 210A and the imagery 210B.

In some cases, the obstructions might correspond to the same position in the scene being imaged. In these cases, prediction techniques implemented using an ANN may be used to predict the visual data in the scene in the location of the obstructions. For example, if the imagery is generated via a moving camera, imagery from previous frames (where the obstructed location was not obstructed) may be used. Alternatively, inpainting or homography techniques, as described in greater detail below, may be used to predict the visual data in the scene in the location of the obstructions.

The disparity detection engine may include at least one of an ANN or a set of rules for detecting disparities. The ANN may be trained using supervised learning applied to a human-generated dataset of identified disparities between images generated by different lenses of stereo cameras.

The obstruction identification engine 304 identifies, based on the detected disparity, the position of the obstruction and which lens 208A, 208B or both 208A and 208B has the obstruction. The obstruction may be identified based on translucency or opacity of a lens or based on the obstruction not moving within the imagery 210A, 210B when the stereo camera 202 is moving. Alternatively, an ANN may be used to identify the obstructions. The ANN may be trained using supervised learning (with a human-labeled training dataset of obstructions). The ANN may leverage a feature vector that includes the output of the disparity detection engine 302. The ANN may identify the obstruction and, in some cases, predict a cause of the obstruction (e.g., at least one of a crack in a material covering the lens, mud on the lens, snow on the lens, or water on the lens).

The visual output generation engine 306 generates the visual output 214 based on at least one of the imagery 210A, 210B, the output of the disparity detection engine 302, or the output of the obstruction identification engine 306. In some cases, the visual output 214 is a combination of the imagery 210A and the imagery 210B. For example, if the imagery 210A includes an obstruction and the imagery 210B does not include the obstruction, the visual output generation engine 306 augments the imagery 210A to remove the obstruction. The visual output generation engine 306 identifies the portion of the imagery 210B that corresponds to the obstructed part of the imagery 210A. The visual output generation engine 306 modifies the imagery 210A based on the portion of the imagery 210B by superimposing the portion of the imagery 210B onto the imagery 210A and blending an edge of the superimposed portion of the imagery 210B to reduce a contrast along the edge. In some cases, the visual output generation engine 306 adjusts at least one of a tone, a hue, or a saturation of the superimposed portion of the imagery 210B based on the at least one of the tone, the hue, or the saturation of first imagery 210A. As a result, the superimposed portion is blended onto the imagery 210A, resulting in a more natural-looking view of the imagery 210A.

In some cases, artificial intelligence technology, for example, an ANN, is used in the blending process. Upon identifying the obstruction in the imagery 210A, homography techniques may be used to find the corresponding portion of the imagery 210B. Homography involves representing two images as a matrix of pixels and finding corresponding parts of the images based on corresponding parts of the matrix. For example, if there is an obstruction between a tree and a car in the imagery 210A, the tree and the car are located in the imagery 210B, and the region between the tree and the car in the imagery 210B is determined to correspond to the obstruction.

The corresponding portion of the imagery 210B may then be added to the imagery 210A. Image inpainting techniques may be used to add the portion of the imagery 210B onto the imagery 210A. Image inpainting takes the portion of the imagery 210B, resizes the portion, and adjusts the tone, the hue, the saturation, and the like of the portion in order to match the portion of the imagery 210B to the imagery 210A into which it is being added.

In some cases, parts of the imagery 210A are obstructed and other parts of the imagery 210B are obstructed. In these cases, the process above may be repeated (e.g., by swapping the imagery 210A and the imagery 210B) for the obstructed parts of the imagery 210B. In some cases, the same parts of the imagery 210A and the imagery 210B are obstructed. In these cases, artificial intelligence techniques may be used to predict the contents of the obstructed parts of the imagery. For example, a generative pre-trained transformer (GPT) engine that is configured to predict the missing word in a sentence may be reconfigured and trained to predict the missing portion of the imagery. In some cases, if the stereo camera 202 is moving, the GPT engine may base its predictions on previously generated images in the imagery 210A or the imagery 210B. If other images of the scene being imaged by the stereo camera 202 are available, the GPT engine may base its predictions on those other images.

To predict what is in an obstructed part of the imagery 210A, 210B using the GPT engine, a two-step process may be followed. First, an image completion technique such as inpainting may be used to fill in the obstructed part of the imagery 210A, 210B with plausible content, generating complete imagery. Then, the GPT engine may be employed to analyze the complete imagery and generate a prediction for the content within the previously obstructed part. By leveraging its understanding of context and semantic relationships learned from vast amounts of text data, the GPT engine can provide a prediction based on the visual information present in the image, allowing it to infer what objects or features might exist in the obstructed part.

The GPT engine is an ANN that is designed for natural language processing tasks and as described herein, may be adapted for image processing. The GPT engine is configured to process and generate human-like natural language text. While traditional ANN engines focus on tasks such as image recognition or pattern analysis, GPT engines are typically used for natural language processing tasks. A GPT engine is typically trained on text data and can generate coherent and contextually relevant responses based on the given input. GPT engines utilize a transformer architecture, which allows them to capture complex dependencies in language and generate high-quality text, making them powerful tools for applications like language translation, chatbots, content generation, and more. The transformer architecture may also be used to capture dependencies in imagery and scene analysis and to predict missing elements in a scene. It should be noted that the use of the GPT engine, as disclosed herein, is not limited to removing obstructions from imagery generated by a stereo camera and may also be used, for example, to restore damaged photographs or to remove undesirable elements (e.g., extra people, garbage cans, or the like) from photographs taken by a stereo camera or a non-stereo camera.

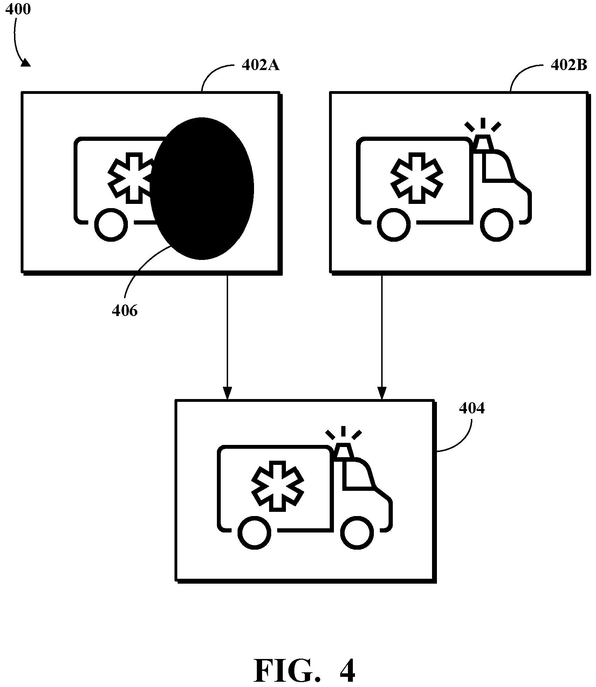

FIG. 4 illustrates an example of image processing 400 involved in adjusting visual output of a stereo camera. As shown, the image processing 400 includes two images 402A, 402B. A visual output 404 may be generated based on the two images 402A, 402B. The image 402A may correspond to first imagery (e.g., the imagery 210A) from a first lens (e.g., the lens 208A) of a stereo camera (e.g., the stereo camera 202). The image 402B may correspond to second imagery (e.g., the imagery 210B) from a second lens (e.g., the lens 208B) of the stereo camera. As illustrated the image 402A has an obstruction 406, which may correspond, for example, to a drop of mud (or another substance) covering a part of the first lens. As illustrated, the obstruction 406 has an elliptical shape. However, it should be noted that obstructions may have other shapes. The image 402B lacks an obstruction.

As described above, the visual output 404 is generated using the images 402A, 402B. For example, the visual output 404 may correspond to (i) the image 402B that lacks the obstruction 406, (ii) a correction of the image 402A to remove the obstruction 406, or a combination of (i) and (ii). The correction of the image 402A may be generated using an ANN or a GPT, as described above. Alternatively, other image correction techniques may be used.

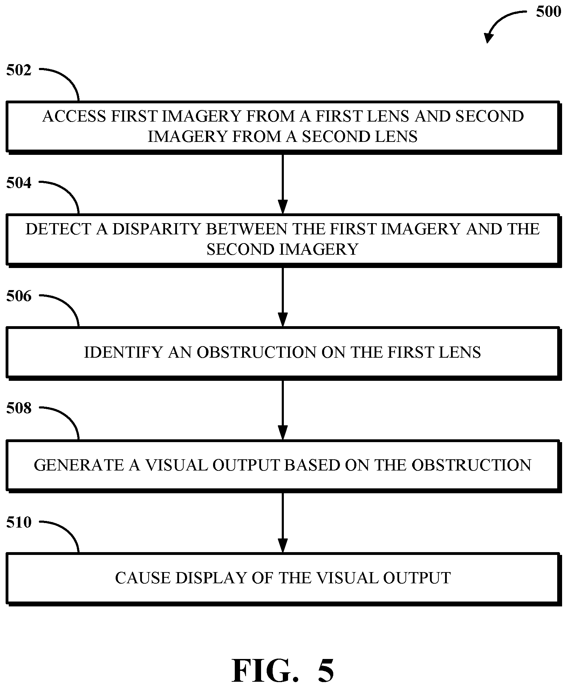

To further describe some implementations in greater detail, reference is next made to examples of techniques for adjusting a visual output of a stereo camera based on lens obstruction. FIG. 5 is a flowchart of an example of a technique 500 for adjusting visual output of a stereo camera. The technique 500 can be executed using computing devices, such as the systems, hardware, and software described with respect to FIGS. 1-4. The technique 500 can be performed, for example, by executing a machine-readable program or other computer-executable instructions, such as routines, instructions, programs, or other code. The steps, or operations, of the technique 500 or another technique, method, process, or algorithm described in connection with the implementations disclosed herein can be implemented directly in hardware, firmware, software executed by hardware, circuitry, or a combination thereof.

For simplicity of explanation, the technique 500 is depicted and described herein as a series of steps or operations. However, the steps or operations in accordance with this disclosure can occur in various orders and/or concurrently. Additionally, other steps or operations not presented and described herein may be used. Furthermore, not all illustrated steps or operations may be required to implement a technique in accordance with the disclosed subject matter.

At 502, a computer accesses first imagery (e.g., the imagery 210A) from a first lens (e.g., the lens 208A) and second imagery (e.g., the imagery 210B) from a second lens (e.g., the lens 208B0. The first lens and the second lens are components of a stereo camera (e.g., the stereo camera 202). The computer includes processing circuitry and a memory subsystem. The computer may include a single computer or multiple computers working together. The computer may be a component of a machine that includes the stereo camera and, in some cases, other components. For example, the computer may be an on-board computer of a vehicle. Alternatively, the computer may be connected to the stereo camera by at least one of a wired connection or a wireless connection. For example, the computer may be a server that communicates with a stereo camera of a remote machine.

At 504, the computer detects a disparity between the first imagery and the second imagery. The detected disparity might be different from an expected disparity due to positioning of the first lens and the second lens. For example, in the images 402A, 402B, the disparity may correspond to the obstruction 406 but not to the shifting of the truck depicted in the images 402A, 402B. The detected disparity might also be different from a disparity due to different contrast, tone, hue, or saturation of images generated via the first lens and via the second lens.

At 506, the computer identifies an obstruction on the first lens based on the detected disparity. In some cases, if the stereo camera is moving, the computer may identify the obstruction based, at least in part, on a portion of the first imagery not changing upon movement of the stereo camera. Alternatively or in addition, other rule-based or artificial intelligence techniques may be used to identify the obstruction. In some implementations, the computer classifies the obstruction based on at least one of a color, a transparency, or a translucency of the obstruction and outputs the identified classification. For example, if the obstruction is white, the obstruction is likely snow on the first lens. If the obstruction is translucent, the obstruction is likely water on the first lens. If the obstruction is brown, the obstruction is likely mud on the first lens.

At 508, the computer generates a visual output associated with the stereo camera based on the obstruction. In some cases, the visual output may lack the obstruction. In some cases, the visual output may include the obstruction and/or text (e.g., adjacent to the imagery from the stereo camera) comprising a prompt for a user to clean the stereo camera. The prompt may include natural language text.

At 510, the computer causes display of the generated visual output. In some cases, the computer displays the generated visual output using a display subsystem (e.g., one or more display units or one or more display ports) of the computer. Alternatively, the computer may transmit the generated visual output for display at a display subsystem external to the computer. The external display subsystem may be onboard a machine that includes the stereo camera or at a remote location from which the machine that includes the stereo camera is being controlled or observed.

In some cases, the computer causes cleaning of the first lens in response to identifying the obstruction. The cleaning may involve at least one of manual cleaning, automatic cleaning, running a wiper blade over the first lens, peeling a layer off the first lens, or spraying a cleaning spray over the first lens. After cleaning of the first lens, the computer may determine, based on imagery generated via the first lens, whether the obstruction remains present. If the obstruction remains present, (e.g., due to a material of the lens being scratched or cracked) the computer may provide an output for servicing the stereo camera to remove the obstruction. For example, the output may include text overlaying a displayed image (e.g., generated via the first lens) that instructs a user to contact a technician or to repair or replace the first lens. In some cases, the output includes a link or a webpage or an application for scheduling an appointment with a technician to service the stereo camera. In some cases, the appointment may be scheduled automatically or a notification may be automatically transmitted to a technician to come to the location of the stereo camera in order to service the stereo camera.

As used herein, unless explicitly stated otherwise, any term specified in the singular may include its plural version. For example, "a computer that stores data and runs software," may include a single computer that stores data and runs software or two computers - a first computer that stores data and a second computer that runs software. Also "a computer that stores data and runs software," may include multiple computers that together stored data and run software. At least one of the multiple computers stores data, and at least one of the multiple computers runs software.

As used herein, the term "computer-readable medium" encompasses one or more computer readable media. A computer-readable medium may include any storage unit (or multiple storage units) that store data or instructions that are readable by processing circuitry. A computer-readable medium may include, for example, at least one of a data repository, a data storage unit, a computer memory, a hard drive, a disk, or a random access memory. A computer-readable medium may include a single computer-readable medium or multiple computer-readable media. A computer-readable medium may be a transitory computer-readable medium or a non-transitory computer-readable medium.

As used herein, the term "memory subsystem" includes one or more memories, where each memory may be a computer-readable medium. A memory subsystem may encompass memory hardware units (e.g., a hard drive or a disk) that store data or instructions in software form. Alternatively or in addition, the memory subsystem may include data or instructions that are hard-wired into processing circuitry.

As used herein, processing circuitry includes one or more processors. The one or more processors may be arranged in one or more processing units, for example, a central processing unit (CPU), a graphics processing unit (GPU), or a combination of at least one of a CPU or a GPU.

As used herein, the term "engine" may include software, hardware, or a combination of software and hardware. An engine may be implemented using software stored in the memory subsystem. Alternatively, an engine may be hard-wired into processing circuitry. In some cases, an engine includes a combination of software stored in the memory subsystem and hardware that is hard-wired into the processing circuitry.

The implementations of this disclosure can be described in terms of functional block components and various processing operations. Such functional block components can be realized by a number of hardware or software components that perform the specified functions. For example, the disclosed implementations can employ various integrated circuit components (e.g., memory elements, processing elements, logic elements, look-up tables, and the like), which can carry out a variety of functions under the control of one or more microprocessors or other control devices. Similarly, where the elements of the disclosed implementations are implemented using software programming or software elements, the systems and techniques can be implemented with a programming or scripting language, such as C, C++, Java, JavaScript, assembler, or the like, with the various algorithms being implemented with a combination of data structures, objects, processes, routines, or other programming elements.

Functional aspects can be implemented in algorithms that execute on one or more processors. Furthermore, the implementations of the systems and techniques disclosed herein could employ a number of conventional techniques for electronics configuration, signal processing or control, data processing, and the like. The words "mechanism" and "component" are used broadly and are not limited to mechanical or physical implementations, but can include software routines in conjunction with processors, etc. Likewise, the terms "system" or "tool" as used herein and in the figures, but in any event based on their context, may be understood as corresponding to a functional unit implemented using software, hardware (e.g., an integrated circuit, such as an ASIC), or a combination of software and hardware. In certain contexts, such systems or mechanisms may be understood to be a processor-implemented software system or processor-implemented software mechanism that is part of or callable by an executable program, which may itself be wholly or partly composed of such linked systems or mechanisms.

Implementations or portions of implementations of the above disclosure can take the form of a computer program product accessible from, for example, a computer-usable or computer-readable medium. A computer-usable or computer-readable medium can be a device that can, for example, tangibly contain, store, communicate, or transport a program or data structure for use by or in connection with a processor. The medium can be, for example, an electronic, magnetic, optical, electromagnetic, or semiconductor device.

Other suitable mediums are also available. Such computer-usable or computer-readable media can be referred to as non-transitory memory or media, and can include volatile memory or non-volatile memory that can change over time. The quality of memory or media being non-transitory refers to such memory or media storing data for some period of time or otherwise based on device power or a device power cycle. A memory of an apparatus described herein, unless otherwise specified, does not have to be physically contained by the apparatus, but is one that can be accessed remotely by the apparatus, and does not have to be contiguous with other memory that might be physically contained by the apparatus.

While the disclosure has been described in connection with certain implementations, it is to be understood that the disclosure is not to be limited to the disclosed implementations but, on the contrary, is intended to cover various modifications and equivalent arrangements included within the scope of the appended claims, which scope is to be accorded the broadest interpretation so as to encompass all such modifications and equivalent structures as is permitted under the law.

## Claims

1. A method comprising:
accessing first imagery (210A) from a first lens (208A) and second imagery (210B) from a second lens (208B), the first lens and the second lens being components of a stereo camera (202);
detecting a disparity between the first imagery (210A) and the second imagery (210B);
identifying an obstruction (406) on the first lens based on the detected disparity;
generating a visual output (214) associated with the stereo camera (202) based on the obstruction (406); and
causing display of the generated visual output (214).

2. The method of claim 1, wherein generating the visual output (214) comprises:
presenting the second imagery (210B) in the visual output (214).

3. The method of claim 1, wherein generating the visual output (214) comprises:
presenting the first imagery (210A) in the visual output to prompt a user to clean the first lens (208A).

4. The method of claim 3, further comprising:
presenting text prompting the user to clean the first lens (208a) overlaying the first imagery (210a).

5. The method of claim 1, wherein generating the visual output (214) comprises:
augmenting the first imagery (210A) to remove the obstruction (406).

6. The method of claim 5, wherein augmenting the first imagery (210A) comprises:
identifying a portion of the second imagery (210B) corresponding to the obstruction (406);
modifying the first imagery (210A) based on the portion of the second imagery (210B), wherein modifying the first imagery (210A) comprises:
superimposing the portion of the second imagery (210B) into the first imagery (210A); and
blending an edge of the superimposed portion of the second imagery (210B) to reduce a contrast along the edge.

7. The method of claim 6, wherein modifying the first imagery (210A) further comprises:
adjusting at least one of a tone, a hue, or a saturation of the superimposed portion of the second imagery (210B) based on at least one of the tone, the hue, or the saturation of the first imagery (210A).

8. The method of any of claims 1-7, further comprising:
causing cleaning of the first lens (208A) in response to identifying the obstruction (406);
determining, after cleaning of the first lens (208A), that the obstruction (406) remains present; and
providing an output for servicing the stereo camera (202) to remove the obstruction (406).

9. The method of claim 8, wherein the output for servicing the stereo camera (202) comprises text overlaying a displayed image, the text comprising a prompt for a user to service the stereo camera (202).

10. The method of any of claims 1-7, wherein identifying the obstruction (406) is based, at least in part, on a portion of the first imagery (210A) not changing upon movement of the first lens (208A).

11. The method of any of claims 1-7, further comprising:
identifying a classification of the obstruction (406) based on at least one of a color, a transparency, or a translucency of the obstruction (406); and
providing an output representing the identified classification.

12. The method of any of claims 1-7, wherein detecting the disparity and identifying the obstruction (406) leverages an image processing engine (212), wherein the image processing engine (212) includes at least one artificial neural network.

13. The method of any of claims 1-7, wherein the obstruction (406) obstructs a portion of a scene viewed by the first lens (208A) and reduces a quality of the first imagery (210A).

14. A computer-readable medium (104) storing instructions which, when executed by processing circuitry (102), cause the processing circuitry (102) to perform operations comprising:
accessing first imagery (210A) from a first lens (208A) and second imagery (210B) from a second lens (208B), the first lens and the second lens being components of a stereo camera (202);
detecting a disparity between the first imagery (210A) and the second imagery (210B);
identifying an obstruction (406) on the first lens based on the detected disparity;
generating a visual output (214) associated with the stereo camera (202) based on the obstruction (406); and
causing display of the generated visual output (214).

15. A system (100, 200) comprising:
processing circuitry (102); and
a memory subsystem (204) storing instructions which, when executed by the processing circuitry (102), cause the processing circuitry (102) to perform operations comprising:
accessing first imagery (210A) from a first lens (208A) and second imagery (210B) from a second lens (208B), the first lens and the second lens being components of a stereo camera (202);
detecting a disparity between the first imagery (210A) and the second imagery (210B);
identifying an obstruction (406) on the first lens based on the detected disparity;
generating a visual output (214) associated with the stereo camera (202) based on the obstruction (406); and
causing display of the generated visual output (214).

## Amended claims

### Amended claims in accordance with Rule 137(2) EPC.

**1.** A method comprising:
accessing first imagery (210A) from a first lens (208A) and second imagery (210B) from a second lens (208B), the first lens and the second lens being components of a stereo camera (202);
detecting a disparity between the first imagery (210A) and the second imagery (210B);
identifying an obstruction (406) on the first lens based on the detected disparity;
generating a visual output (214) associated with the stereo camera (202) based on the obstruction (406); and
causing display of the generated visual output (214);
**characterized in that** generating the visual output (214) comprises presenting the first imagery (210A), which includes the obstruction, and presenting text overlaying or adjacent to the first imagery (210A) in the visual output prompting the user to clean the first lens (208A).

**2.** The method of claim 1, wherein generating the visual output (214) comprises:
presenting the second imagery (210B) in the visual output (214).

**3.** The method of claim 1, wherein generating the visual output (214) comprises:
augmenting the first imagery (210A) to remove the obstruction (406).

**4.** The method of claim 3, wherein augmenting the first imagery (210A) comprises:
identifying a portion of the second imagery (210B) corresponding to the obstruction (406);
modifying the first imagery (210A) based on the portion of the second imagery (210B), wherein modifying the first imagery (210A) comprises:
superimposing the portion of the second imagery (210B) into the first imagery (210A); and
blending an edge of the superimposed portion of the second imagery (210B) to reduce a contrast along the edge.

**5.** The method of claim 4, wherein modifying the first imagery (210A) further comprises:
adjusting at least one of a tone, a hue, or a saturation of the superimposed portion of the second imagery (210B) based on at least one of the tone, the hue, or the saturation of the first imagery (210A).

**6.** The method of any of claims 1-5, further comprising:
causing cleaning of the first lens (208A) in response to identifying the obstruction (406);
determining, after cleaning of the first lens (208A), that the obstruction (406) remains present; and
providing an output for servicing the stereo camera (202) to remove the obstruction (406).

**7.** The method of claim 6, wherein the output for servicing the stereo camera (202) comprises text overlaying a displayed image, the text comprising a prompt for a user to service the stereo camera (202).

**8.** The method of any of claims 1-5, wherein identifying the obstruction (406) is based, at least in part, on a portion of the first imagery (210A) not changing upon movement of the first lens (208A).

**9.** The method of any of claims 1-5, further comprising:
identifying a classification of the obstruction (406) based on at least one of a color, a transparency, or a translucency of the obstruction (406); and
providing an output representing the identified classification.

**10.** The method of any of claims 1-5, wherein detecting the disparity and identifying the obstruction (406) leverages an image processing engine (212), wherein the image processing engine (212) includes at least one artificial neural network.

**11.** The method of any of claims 1-5, wherein the obstruction (406) obstructs a portion of a scene viewed by the first lens (208A) and reduces a quality of the first imagery (210A).

**12.** A computer-readable medium (104) storing instructions which, when executed by processing circuitry (102), cause the processing circuitry (102) to perform operations comprising:
accessing first imagery (210A) from a first lens (208A) and second imagery (210B) from a second lens (208B), the first lens and the second lens being components of a stereo camera (202);
detecting a disparity between the first imagery (210A) and the second imagery (210B);
identifying an obstruction (406) on the first lens based on the detected disparity;
generating a visual output (214) associated with the stereo camera (202) based on the obstruction (406); and
causing display of the generated visual output (214);
**characterized in that** generating the visual output (214) comprises presenting the first imagery (210A), which includes the obstruction, and presenting text overlaying or adjacent to the first imagery (210A) in the visual output prompting the user to clean the first lens (208A).

**15.** A system (100, 200) comprising:
processing circuitry (102); and
a memory subsystem (204) storing instructions which, when executed by the processing circuitry (102), cause the processing circuitry (102) to perform operations comprising:
accessing first imagery (210A) from a first lens (208A) and second imagery (210B) from a second lens (208B), the first lens and the second lens being components of a stereo camera (202);
detecting a disparity between the first imagery (210A) and the second imagery (210B);
identifying an obstruction (406) on the first lens based on the detected disparity;
generating a visual output (214) associated with the stereo camera (202) based on the obstruction (406); and
causing display of the generated visual output (214);
**characterized in that** generating the visual output (214) comprises presenting the first imagery (210A), which includes the obstruction, and presenting text overlaying or adjacent to the first imagery (210A) in the visual output prompting the user to clean the first lens (208A).
